# EUROPÄISCHE PATENTSCHRIFT

(11) **EP 1 318 315 B1**
(45) Veröffentlichungstag und Bekanntmachung des Hinweises auf die Patenterteilung: **02.11.2005**
(21) Anmeldenummer: 02027245.6
(22) Anmeldetag: 06.12.2002
(51) Int. Cl.: F16B 13/12

(54) **Doppelwandige Dübelplatte**
Flat dowel defined by two walls
Cheville plate à deux parois

(30) Priorität: 08.12.2001 DE 10160433
(43) Veröffentlichungstag der Anmeldung: 11.06.2003
(73) Patentinhaber: Hermanns, Heinz-W., 67373 Dudenhofen (DE)
(72) Erfinder: Hermanns, Heinz-W., 67373 Dudenhofen (DE)
(74) Vertreter: Schulte, Jörg

(56) Entgegenhaltungen:
- US-A- 1 559 619
- US-A- 4 203 193
- US-A- 5 447 005
- US-A- 5 791 845

## Beschreibung

Die Erfindung betrifft ein Verbindungselement zur Sicherung der vorgesehenen Lage eines Befestigungsmittels in einer Gebäudewand, insbesondere einer Decke.

Derartige Verbindungselemente werden in vorgebildete Löcher eingeschoben oder in den Werkstoff eingepreßt. Sie verbinden die Teile durch Reibung, Verkeilung oder Erstarrung eines Bindemittels. Diese Dübel können enorme Kräfte aufnehmen, nachdem sie durch Einbringen des Befestigungsmittels, insbesondere durch Eindrehen einer Schraube gespreizt und dabei keilartig gegen die Lochwandung gepreßt werden. Wenn diese Verbindungsmittel aber in Werkstoffe geringer Festigkeit eingebracht werden, stellt sich das Problem, dass sich kein ausreichender Halt für den zu befestigenden Gegenstand bietet. Dies ist beispielsweise der Fall bei Gebäuden, an deren Außenseite Dämmstoffe angeordnet sind, welche keine konstruktive Befestigungsmöglichkeit bieten. Ein solches Problem stellt sich etwa bei Garagendämmungen, an denen Elektro- oder andere Rohre befestigt werden sollen. Dabei bleibt nur die Möglichkeit, besonders lange und damit knickgefährdete Dübel zu verwenden, die im Beton fixiert werden. Über die konstruktiven Probleme dieser Lösung hinaus entstehen dabei enorme Kälte- oder auch Schallbrücken, die die Wirkung der Dämmung erheblich beeinflussen. Auch die Dübel in der Mineralstoffdämmung selbst zu verankern, hat sich nach bisherigem Stand der Technik als unzweckmäßig erwiesen, weil dieser Untergrund nicht über die notwendige Rohdichte und Zugfestigkeit verfügt.

Der vorliegenden Erfindung stellt sich damit die Aufgabe, einen Dübel zu schaffen, der auch in Materialien geringer Zugfestigkeit gut fixiert werden kann.

Diese Aufgabe wird dadurch gelöst, dass das Verbindungselement als doppelwandige Fixierplatte ausgebildet ist, wobei die beiden Wandungen der Fixierplatte zur Aufnahme des Befestigungsmittels dienen und wobei die Wandungen am hinteren Ende des Verbindungselementes verbunden und am vorderen Ende des Verbindungselementes nicht verbunden ausgebildet sind.

Damit ist ein hohen Belastungen standhaltendes Verbindungselement in Form eines doppelwandigen Dübels geschaffen, welches leicht und schnell montierbar ist, indem dieses in die Gebäudewand oder -decke eingesetzt, eingeschlagen oder eingetrieben wird. Beim Einbringen des Befestigungsmittels, beispielsweise einer Schraube fixiert sich das Verbindungselement dann dauerhaft selbst, weil beim Eindrehen der Schraube die Fixierplatten auseinanderspreizen, sodass sich das Verbindungselement gegenüber der Gebäudewand verkeilt.

Vorteilhaft ist es dabei, wenn die beiden Wandungen eine ungleichmäßige Struktur aufweisen, sodass sich zwischen den Wandungen ergebende einzelne Öffnungen zur Aufnahme des Befestigungsmittels dienen. In diese Öffnungen können Schrauben oder andere Befestigungsmittel eingesetzt werden, ohne dass die Gefahr bestünde, dass das als doppelte Fixierplatte ausgebildete Verbindungselement durchdrehen könnte. Vielmehr wird durch das erfindungsgemäße Verbindungselement eine große Anpreßfläche in der Gebäudewand, vor allem wenn es sich dabei um eine Dämmplatte handelt, aktiviert.

Eine besonders geeignete Form der ungleichmäßigen Struktur ist die, bei der die Wandungen eine wellenartige Struktur aufweisen, sodass im Bereich einander gegenüber liegender Wellentäler mindestens eine Öffnung zur Aufnahme eines Befestigungsmittels gebildet ist. Die Fixierplatten sind also, beispielsweise durch Wahl eines einteiligen Verbindungselementes so aufeinander abzustimmen, dass gegenüberliegende Platten oder Plättchen eine Öffnung ergeben, in die eine Schraube einsetzbar ist. Größe bzw. Tiefe der Wellentäler und/oder Abstand der Fixierplättchen zueinander sind dabei Faktoren, welche in Abhängigkeit von der anvisierten Traglast auf Größe und Durchmesser der Schraube abstimmbar sind, um einen möglichst optimalen Kraftschluss zu erreichen. Anstatt der wellenartigen Ausbildung können auch Abkantungen vorhanden sein.

Für die angesprochene Keilwirkung zum Erreichen des optimalen Kraftschlusses wird vorgeschlagen, dass die Wandungen am hinteren Verbindungselement verbunden und am vorderen Ende des Verbindungselementes nicht verbunden ausgebildet sind. Unter dem vorderen Ende wird hier das Ende verstanden, mit dem der Dübel in die Wand eingesetzt wird. Dies ist notwendig zum Erzielen der beabsichtigten Spreizwirkung und der keilförmigen Ausbildung des Dübels beim Fixieren des Befestigungselementes. Hinzu kommt, dass hierbei keine Abplatzungen an der Oberfläche im Übergang zwischen Dübel und Dämmplatte entstehen können.

Zweckmäßigerweise ist die Fixierplatte aus Metall oder aus Kunststoff hergestellt, um mit den Verbindungselementen besonders hohe Kräfte aufnehmen zu können. Für den Fall einer Fixierplatte aus Metall ist vorgesehen, dass diese mit einer Zinkschicht überzogen ist, damit sich die Schrauben in das Material hineinfressen können, um einen noch günstigeren Kraftschluss zu erreichen.

Um zu gewährleisten, dass das Verbindungselement einerseits ohne allzu großen Widerstand in die Gebäudewand hineingeschlagen werden kann und dass andererseits die erhoffte Spreizwirkung am inneren Ende des Verbindungsmittels eintritt, ist vorgesehen, dass die Materialstärke der Fixierplatte in Abhängigkeit von deren Tragfähigkeit bemessen ist. Wichtig ist, dass der Dübel gerade beim Einsetzen in einen verhältnismäßig weichen Dämmstoff darin eine große Anpreßfläche aktivieren kann, was bei Auswahl der Materialstärke berücksichtigt werden sollte.

Eine bevorzugte Ausführungsform der Erfindung sieht dabei vor, dass die Fixierplatten eine Materialstärke von ca. 0,5 mm aufweisen. Bei dieser Materialstärke läßt sich der Dübel auf besonders geeignete Weise in die Gebäudewand einsetzen und aufgrund der günstigen Verformungseigenschaften beim Verkanten in dieser fixieren. Diese Materialstärke ist insbesondere auf metallene Fixierplatten bezogen, die ggf. auch noch mit einer rauhen Beschichtung zur besseren Fixierung versehen sein können.

Zudem ist vorgesehen, dass die Materialstärke der Fixierplatte in Hinblick auf die Spreizfähigkeit der Wandungen bei der Aufnahme der Befestigungsmittel bemessen ist. Die Keilwirkung, die mit dem erfindungsgemäßen Dübel erreicht werden kann, ist insbesondere davon abhängig, dass sich der Dübel an seinem vorderen in der Gebäudewand befindlichen Ende günstig verformen kann. Doch nicht nur die Dicke der Metallplättchen sondern auch der an Form und Struktur dienen dazu, die Steifigkeit und Spreizfähigkeit der Dübel zu beeinflussen.

Es versteht sich, dass die Materialstärke der Fixierplatte und die wellenartige Struktur handelsüblichen Befestigungsmitteln, insbesondere Schrauben angepaßt ist. Zwischen den Fixierplatten, genauer gesagt zwischen gegenüberliegenden Wellentälern ergeben sich über die Breite des Dübels mehrere Öffnungen, die zur Aufnahme einer Schraube dienen können, wobei es beim Hereindrehen der Schrauben zu der gewünschten Spreizwirkung kommt. Vorteilhafterweise kann sich der erfindungsgemäße Dübel auch Schrauben verschiedener Art, Länge und Durchmesser anpassen, weil die Fixierplatten die hierfür notwendige Flexibilität und Anpassungsfähigkeit gewährleisten.

Um Öffnungen und auch Führungen für die einzudrehenden Schrauben zwischen den Fixierplatten zu erreichen, ist es zweckmäßig, wenn die Wellen in Längsrichtung der Fixierplatte verlaufend ausgebildet sind, wodurch sich quasi eine Lochung zur Aufnahme der Schrauben ergibt.

Das Verbindungselement kann sowohl aus zwei einzelnen, dann verbundenen Fixierplatten zusammengesetzt werden, als auch einteilig ausgebildet sein. Dafür empfiehlt es sich, dass die Fixierplatte im Bereich ihrer Mitte eine Doppelwandung ergebend verformt ist. Dazu wird eine Dübelplatte in ihrer Mitte umgeschlagen, sodass sich eine Doppelwandung ergibt. In dieser Position wird der doppelwandige Dübel dann mit den vorderen losen Enden voran in die Gebäudewand eingesetzt.

Auf eine Weise mit besonders geringem Aufwand wird das Umgeschlagen erreicht, indem die Fixierplatte im Bereich ihrer Mitte ein in Querrichtung zu den Wellen verlaufendes Langloch aufweist, wodurch der Bereich, in dem die Dübelplatte umgeschlagen wird, vorgegeben ist. Aufgrund des geringen Materialwiderstands, weil nur an den Außenseiten des Langlochs zwei Stege verbleiben, ist das Umschlagen an dieser Stelle auch ohne allzu hohen Kraftaufwand maschinell oder auch manuell zu bewältigen. Zudem kann eine das Umschlagen vorgebende Falznut im Bereich de Mitte der Fixierplatte angeordnet sein.

In der alternativen Ausführungsform zu den Dübelplatten mit Langloch ist vorgesehen, dass die Fixierplatte aus zwei durch Schweißung, insbesondere Punktschweißung miteinander verbundenen Wandungen besteht. Dabei werden zwei Fixierplatten als Einzelteile an ihren Enden per Schweißung zusammengefügt. Zwischen den Schweißpunkten verbleibt ein Freiraum, in dem sich mehrere Öffnungen zur Positionierung der Schraube ergeben.

Die Erfindung zeichnet sich insbesondere dadurch aus, dass ein doppelwandiger Dübel geschaffen ist, der eine deutlich gesteigerte Tragfähigkeit aufweist. Dieses Verbindungselement ist besonders für den Einsatz in den Verkleidungen von Gebäudedecken geeignet, die aufgrund ihrer Zusammensetzung, wie z.B. Dämmmaterial mit geringer Eigenfestigkeit schlechte Verankerungsmöglichkeiten bieten. Hier schafft der erfindungsgemäße Dübel Abhilfe, da dieser eine große Anpreßfläche aufweist, aufgrund seiner Größe gegen Verdrehen gesichert ist und sich bei der Montage selbst dauerhaft fixiert. Beim Festdrehen der Schraube frißt sich diese gewissermaßen in den doppelwandigen Dübel Öffnungen die sich aufgrund der ungleichmäßigen, wellenartigen oder abgekanteten Struktur ergeben hinein, welcher sich daraufhin an seinem vorderen Ende aufspreizt, was zu einer Art Keilwirkung führt. Zugleich soll der Dübel die Auflagerfläche für den Befestigungspunkt sein, damit auch auf den Einsatz von Spannungsverteilungsscheiben verzichtet werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Verbindungselement mit eingedrehter Schraube in per- spektivischer Ansicht,
- Fig. 2: die hintere Ansicht eines Verbindungselementes,
- Fig. 3: die vordere Ansicht eines Verbindungselementes,
- Fig. 4: ein Verbindungselement ohne Schraube in perspektivischer Ansicht,
- Fig. 5: ein durch Schweißung zusammengefügtes Verbindungsele- ment und
- Fig. 6: die Abwicklung eines Verbindungselementes.

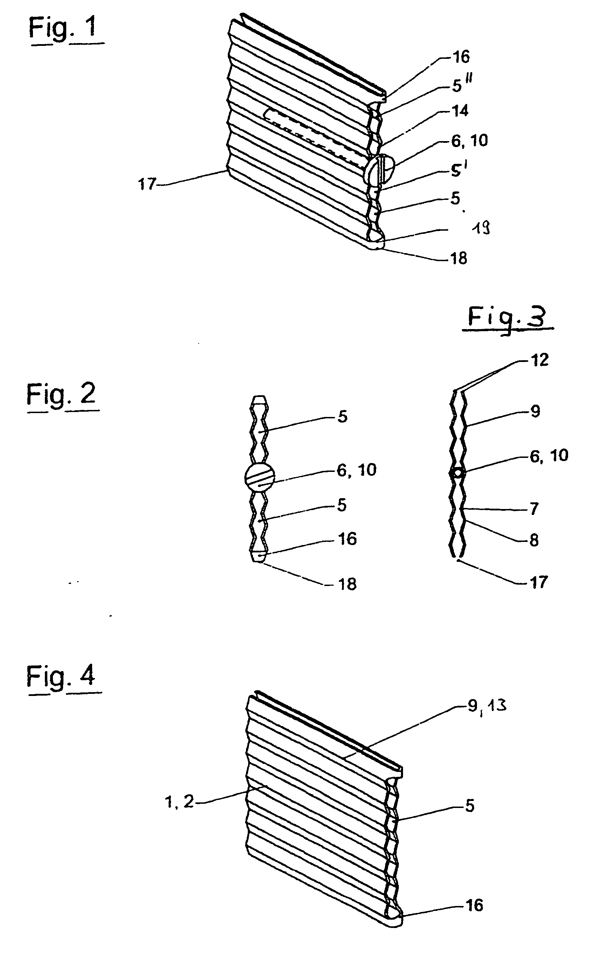

Fig. 1 zeigt ein als Dübel mit Doppelwandung ausgebildetes Verbindungselement 1 zur Sicherung der Lage eines Befestigungsmittels. Das Verbindungselement 1 besteht aus zwei als dünnen Fixierplatten 2 ausgebildeten Wandungen 3, 4 von etwa 0,5 mm Dicke. Beide Wandungen 3, 4 sind am hinteren Ende 18 des Verbindungselementes 1 durch zwei an den Enden eines Langlochs 14 vorhandenen Stegen 16, 19 miteinander verbunden. Zwischen den Stegen 16, 19 ergeben sich aufgrund der ungleichmäßigen, hier wellenartigen Struktur der Fixierplatten 2 mehrere Öffnungen 5, 5', 5", die sich für das Einsetzen des Befestigungsmittels 6, hier einer Schraube 10 eignen. Die Öffnungen 5, 5', 5" bilden sich zwischen den Wellentälern 7. Je nach Materialart, -dicke bzw. -festigkeit passen sich die Fixierplättchen der Schraube 10 an. Dabei kommt es zu dem in der Darstellung gemäß Fig. 1 angedeuteten Spreizeffekt, bei dem sich der doppelwandige Dübel an seinem vorderen Ende 17 durch Auseinandergehen der Wandungen 3,4 spreizt, wodurch es zu einer Keilwirkung kommt, welche das Verbindungselement bzw. die daran befestigten Gegenstände wie z.B. Elektrorohre dauerhaft und sicher fixiert.

Fig. 2 zeigt in einer Ansicht auf das hintere Ende 17 des Dübels mit Doppelwandung 12 gerade im Vergleich zu Fig. 3 die Keilwirkung, die beim Festdrehen der Schraube 10 erreicht werden kann. Die in Fig. 3 angedeutete Verformung mit den nun mehr beabstandeten Wandungen 3 und 4 bedingt diese Keilwirkung.

Beim Einsetzen des Verbindungselementes 1 beispielsweise in eine Dämmstoffplatte sind die Fixierplättchen 2 in dem Zustand gemäß Fig. 4 zunächst parallel zueinander angeordnet, sodass der Widerstand hierbei gering ist. Im Bereich der Unebenheiten 13, hier der Wellen 9 wird nun die Schraube 10 in Längsrichtung zwischen die sich zwischen den Fixierplatten 2 ergebenden Wellentäler 7 gesetzt und dort zwischen den Wellenhügeln 8 in Querrichtung fixiert.

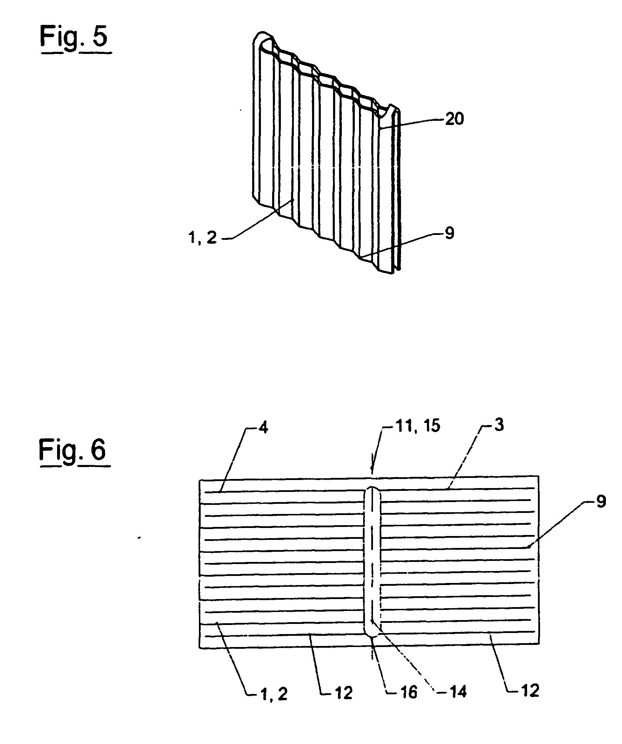

Alternativ zu den umgeschlagenen Fixierplatten 2 z.B. in Fig. 1,4 oder 5 sind in der Darstellung gemäß Fig. 5 Schweißpunkte 20 zu erkennen, über welche zwei separate Fixierplatten 2 zusammengefügt sind, sodass die Ausbildung von Langlöchern und Stegen entfällt.

Schließlich zeigt Fig. 6 die Abwicklung eines Dübels mit Doppelwand 12 vor dem Umschlagen. Hierzu ist das Langloch 14 im Bereich der Mitte 11 zu erkennen. Das Umschlagen wird durch Anordnung einer Falznut 15 erleichtert. Aufgrund der Ausbildung der Stege 16, 19 ist der Materialwiderstand gegen das Umschlagen vorteilhafterweise auch gering.

## Patentansprüche

1. Verbindungselement (1) zur Sicherung der vorgesehenen Lage eines Befestigungsmittels (6) in einer Gebäudewand, insbesondere einer Decke,
**dadurch gekennzeichnet,**
**dass** das Verbindungselement (1) als doppelwandige Fixierplatte (2) ausgebildet ist, wobei die beiden Wandungen (3,4) der Fixierplatte (2) zur Aufnahme des Befestigungsmittels (6) dienen und wobei die Wandungen am hinteren Ende (18) des Verbindungslementes (1) verbunden und am vorderen Ende (17) des Verbindungslementes nicht verbunden ausgebildet sind.

2. Verbindungselement nach Anspruch 1,
**dadurch gekennzeichnet,**
**dass** die beiden Wandungen eine ungleichmäßige Struktur aufweisen, sodass sich zwischen den Wandungen (3,4) ergebende einzelne Öffnungen (5) zur Aufnahme des Befestigungsmittels (6) dienen.

3. Verbindungselement nach Anspruch 2,
**dadurch gekennzeichnet,**
**dass** die Wandungen (3,4) eine wellenartige Struktur aufweisen, sodass im Bereich einander gegenüber liegender Wellentäler (7) mindestens eine Öffnung (5) zur Aufnahme eines Befestigungsmittels (6) gebildet ist.

4. Verbindungselement nach mindestens einem der vorhergehenden Ansprüche,
**dadurch gekennzeichnet,**
**dass** die Fixierplatte (2) aus Metall oder aus Kunststoff hergestellt ist.

5. Verbindungselement nach Anspruch 4,
**dadurch gekennzeichnet,**
**dass** die Fixierplatte (2) mit einer Zinkschicht überzogen ist.

6. Verbindungselement nach mindestens einem der vorhergehenden Ansprüche,
**dadurch gekennzeichnet,**
**dass** die Materialstärke der Fixierplatte (2) in Abhängigkeit von deren Tragfähigkeit bemessen ist.

7. Verbindungselement nach mindestens einem der vorhergehenden Ansprüche,
**dadurch gekennzeichnet**,
die Fixierplatten (2) eine Materialstärke von ca. 0,5 mm aufweisen.

8. Verbindungselement nach mindestens einem der vorhergehenden Ansprüche,
**dadurch gekennzeichnet,**
**dass** die Materialstärke der Fixierplatte (2) in Hinblick auf die Spreizfähigkeit der Wandungen (3,4) beim Einbringen der Befestigungsmittel (6) bemessen ist.

9. Verbindungselement nach mindestens einem der vorhergehenden Ansprüche,
**dadurch gekennzeichnet,**
**dass** die Materialstärke der Fixierplatte (2) und die wellenartige Struktur handelsüblichen Befestigungsmitteln (6), insbesondere Schrauben (10) angepaßt ist.

10. Verbindungselement nach mindestens einem der vorhergehenden Ansprüche,
**dadurch gekennzeichnet,**
**dass** die Wellen (9) in Längsrichtung der Fixierplatte (2) verlaufend ausgebildet sind.

11. Verbindungselement nach mindestens einem der vorhergehenden Ansprüche,
**dadurch gekennzeichnet,**
**dass** die Fixierplatte (2) im Bereich ihrer Mitte (11) eine Doppelwandung (12) ergebend verformt ist.

12. Verbindungselement nach mindestens einem der vorhergehenden Ansprüche,
**dadurch gekennzeichnet,**
**dass** die Fixierplatte (2) im Bereich ihrer Mitte (11) ein in Querrichtung zu den Wellen (9) verlaufendes Langloch (14) aufweist.

13. Verbindungselement nach mindestens einem der vorhergehenden Ansprüche,
**dadurch gekennzeichnet,**
**dass** die Fixierplatte (2) aus zwei durch Schweißung, insbesondere Punktschweißung miteinander verbundenen Wandungen (3,4) besteht.

## Claims

1. Connecting element (1) for securing the provided position of a fastening means (6) in a building wall, especially a ceiling,
**characterized in that**
the connecting element (1) is designed as a double-walled fixing plate (2), whereby both walls (3, 4) of the fixing plate (2) serve to receive the fastening means (6), and whereby the walls are connected on the rear end (18) of the connecting element (1) and are designed to be not connected on the front end (17) of the connecting element.

2. The connecting element according to Claim 1,
**characterized in that**
both walls have a non-uniform structure so that individual openings (5) resulting between the walls (3, 4) serve to receive the fastening means (6).

3. The connecting element according to Claim 2,
**characterized in that**
the walls (3, 4) have a corrugated structure so that at least one opening (5) for receiving a fastening means (6) is formed in the area of corrugated depressions (7) located opposite each other.

4. The connecting element according to at least one of the previous claims,
**characterized in that**
the fixing plate (2) is manufactured from metal or plastic.

5. The connecting element according to Claim 4,
**characterized in that**
the fixing plate (2) is coated with a layer of zinc.

6. The connecting element according to at least one of the previous claims,
**characterized in that**
the material thickness of the fixing plate (2) is measured as a function of its load capacity.

7. The connecting element according to at least one of the previous claims,
**characterized in that**
the fixing plates (2) have a material thickness of approximately 0.5 mm.

8. The connecting element according to at least one of the previous claims,
**characterized in that**
the material thickness of the fixing plate (2) is measured with regard to the ability of the walls (3, 4) to spread when the fastening means (6) is introduced.

9. The connecting element according to at least one of the previous claims,
**characterized in that**
the material thickness of the fixing plate (2) and the corrugated structure are adapted to commercially available fastening means (6), especially screws (10).

10. The connecting element according to at least one of the previous claims,
**characterized in that**
the corrugations (9) are designed to run in the longitudinal direction of the fixing plate (2).

11. The connecting element according to at least one of the previous claims,
**characterized in that**
the fixing plate (2) is deformed in such a manner as to form a double wall (12) in the area of its middle (11).

12. The connecting element according to at least one of the previous claims,
**characterized in that**
the fixing plate (2) comprises an oblong hole (14) running transversely to the corrugations (9) in the area of its middle (11).

13. The connecting element according to at least one of the previous claims,
**characterized in that**
the fixing plate (2) consists of two walls (3, 4) connected to one another by welding, especially spot welding.

## Revendications

1. Elément de raccordement (1) pour sécuriser la position prévue d'un moyen de fixation (6) dans un mur de bâtiment, en particulier un plafond,
**caractérisé en ce que**
l'élément de raccordement (1) est conçu comme plaque de fixation (2) à double paroi, étant donné que les deux parois (3, 4) de la plaque de fixation (2) servent au logement du moyen de fixation (6), et étant donné que les parois se trouvant à l'extrémité arrière (18) de l'élément de raccordement (1) sont conçues pour être reliées et à l'extrémité avant (17) de l'élément de raccordement pour ne pas être reliées.

2. Elément de raccordement selon la revendication 1,
**caractérisé en ce que**
les deux parois présentent une structure non uniforme, de manière à ce que des ouvertures (5) individuelles qui résultent entre les parois (3, 4) servent au logement du moyen de fixation (6).

3. Elément de raccordement selon la revendication 2,
**caractérisé en ce que**
les parois (3, 4) présentent une structure ondulée, de manière à ce que au niveau des creux (7) se trouvant l'un en face de l'autre soit constituée au moins une ouverture (5) pour le logement du moyen de fixation (6).

4. Elément de raccordement selon l'une quelconque au moins des revendications précédentes,
**caractérisé en ce que**
la plaque de fixation (2) est fabriquée en métal ou en matière synthétique.

5. Elément de raccordement selon la revendication 4,
**caractérisé en ce que**
la plaque de fixation (2) est revêtue d'une couche de zinc.

6. Elément de raccordement selon l'une quelconque au moins des revendications précédentes,
**caractérisé en ce que**
l'épaisseur de matériau de la plaque de fixation (2) est dimensionnée en fonction de sa capacité de charge.

7. Elément de raccordement selon l'une quelconque au moins des revendications précédentes,
**caractérisé en ce que**
les plaques de fixation (2) ont une épaisseur de matériau d'environ 0,5 mm.

8. Elément de raccordement selon l'une quelconque au moins des revendications précédentes,
**caractérisé en ce que**
l'épaisseur de matériau de la plaque de fixation (2) est dimensionnée en fonction de la capacité d'écartement des parois (3, 4) lors de l'introduction du moyen de fixation (6).

9. Elément de raccordement selon l'une quelconque au moins des revendications précédentes,
**caractérisé en ce que**
l'épaisseur de matériau de la plaque de fixation (2) et la structure ondulée sont adaptées à des moyens de fixation (6) usuels disponibles sur le marché, en particulier des vis (10).

10. Elément de raccordement selon l'une quelconque au moins des revendications précédentes,
**caractérisé en ce que**
les ondes (9) sont conçues pour aller dans le sens longitudinal de la plaque de fixation (2).

11. Elément de raccordement selon l'une quelconque au moins des revendications précédentes,
**caractérisé en ce que**
la plaque de fixation (2) est déformée au niveau de son centre (11) de manière à former une double paroi (12).

12. Elément de raccordement selon l'une quelconque au moins des revendications précédentes,
**caractérisé en ce que**
la plaque de fixation (2) présente au niveau de son centre (11) un trou oblong (14) qui va dans le sens transversal par rapport aux ondes (9).

13. Elément de raccordement selon l'une quelconque au moins des revendications précédentes,
**caractérisé en ce que**
la plaque de fixation (2) se compose de deux parois (3, 4) reliées l'une à l'autre par soudage, en particulier par soudage par points.
